# EUROPEAN PATENT APPLICATION

(11) **EP 0 731 067 A2**
(43) Date of publication of application: **11.09.1996**
(21) Application number: 96301638.1
(22) Date of filing: 11.03.1996
(51) Int. Cl.: C05B 7/00, C05G 5/00

(54) **High efficiency controlled release phosphate-based fertilizer**

(30) Priority: 10.03.1995 GB 9504875
(71) Applicant: SHERRITT INC., Fort Saskatchewan, Alberta T8L 2P2 (CA)
(72) Inventor: Wolstenholme, Jack, Edmonton Alberta T5K 1X5 (CA); Pauly, Donald G., Edmonton Alberta T5P 2T3 (CA); Nyborg, Martin, Edmonton Alberta T6G 1T6 (CA); Solberg, Elston, Ryley Alberta T0B 4A0 (CA)
(74) Representative: Newstead, Michael John

(57) **Abstract**

A high efficiency controlled release phosphate based fertilizer is provided which is functional to improve plant vigour and increase plant yield. The fertilizer comprises a water soluble phosphate based nutrient core. A moisture permeable coating encapsulates the nutrient core and is functional to release, at a predetermined rate, at least 80% thereof within five to thirty days of germination of the seed.

## Description

### Field of the Invention

The present invention relates to a high efficiency controlled release phosphate-based fertilizer in granular, prill or suitable solid form. More particularly, the fertilizer is characterized by a phosphate based nutrient core encapsulated by a coating having an effective permeability which provides a controlled rate of release of the plant nutrients.

### Background of the Invention

Fertilizers having controlled rate of release of their nutrients by the provision of a coating are well documented in the art. The majority of such formulations have been specifically directed toward the encapsulation of nitrogen products, typically urea, as described in U.S. patent 4,636,242 to R. J. Timmons.

Typically, controlled release fertilizers have involved the encapsulation of plant nutrients with various coating compositions including sulphur, waxes and plastics. In designing controlled release fertilizers, consideration of many variables must be taken into account, exemplary of which are soil temperature, the plant uptake required and, for sulphur coated fertilizers, the extent of, and changes in, the bacterial population of the soil. However, the use of sulphur based coatings, which are dependant for their effectiveness upon bacterial action (an example of which is disclosed in U.S. patent 4,636,242 mentioned supra), have been largely supplanted by insoluble polymer coatings which do not rely upon bacteria for their effectiveness. With polymer coatings, moisture passes through the membrane at a controlled rate, which is a function of the permeability thereof and the soil temperature. The entrapped moisture dissolves the fertilizer forming a solution which is slowly released, passing through the membranous coating and thus into the soil.

Illustrative of the prior art of controlled release fertilizers are the disclosures of U.S. patent 5,030,267 which teaches a somewhat complex coating composition for the easily leached potassium based nutrients and U. S. patents 3,259,482; 4,657,576; 5,009,696 and 5,089,041 which are directed toward formulations for coating nitrogen, phosphate and potassium nutrients, either alone or in combination.

W. Moore in U.S. patent 4,711,659 discloses an attrition resistant controlled release fertilizer involving a polyurethane based coating. This polyurethane coating results from the reaction between two monomers, namely polyols and isocyanates. The invention appears to revolve around the finding that if the isocyanate is sprayed onto the urea granule prior to the application of the polyol it thereby improves the abrasion resistance and resilience of the coating.

U.S. patent 4,880,455 describes a method of manufacturing physically prepared slow-release water-soluble fertilizer by coating fertilizer particles with at least one, and preferably three layers, of a substantially water insoluble polymer possessing a three-dimensional structure. However, the fertilizer must be capable of withstanding a relatively high temperature in the range of 160°C to 180°C, the temperature required for the crosslinking polymerization step.

Whilst but a few patents have been documented herein by way of background, it will be readily appreciated that the patent literature abounds in numerous different coatings effective to provide controlled release rate of the nutrient. Furthermore, it is well understood that the release rate must be matched with the particular crop.

It is to be emphasized that heretofore, controlled release fertilizers based on nitrogen and/or phosphorus and/or potassium have been designed whereby the release occurs throughout the growing period of the crop. Thus, the minimum growing period is considered to be about sixty days and more typically, ninety to one hundred and twenty days. For nursery crops, on which commercial nitrogen/phosphorus/potassium controlled release products are applied, typical release periods range from about six months to a year.

The industry has focused primarily on the provision of controlled release nitrogenous compositions because of the significant losses thereof in use. Deleteriously, without any provision for a control release mechanism, only thirty to fifty percent of the nitrogen ever reaches the plant. The remainder is lost either by water leaching and/or the gaseous evolution of decomposition products.

In contradistinction, however, to coated nitrogen products, it has been the accepted thinking in the fertilizer industry that application of a controlled release coating to phosphate compounds would not markedly affect the recovery thereof by crops although the losses, which occur as a result of the formation of insoluble phosphates that are inaccessible for plant take up, are greater than for nitrogen based fertilizers. Generally, recovery under field conditions for the majority of crops seldom exceeds twenty five percent of the phosphate based fertilizer applied and typically is much less.

Comparative studies of the effects of coated phosphorus based fertilizers versus uncoated phosphorus compounds would indicate that application of a coating to the latter is demonstrably not effective. This is substantiated in an article entitled "Sulfur-Coated Fertilizers for Controlled Release : Agronomic Evaluation" by S. E. Allen and D. A. Mays ( J. Agr. Food Chem. Vol 19, No 5. 1971) which showed that the total yield of forage was less from sulphur-coated diammonium phosphate than from uncoated diammonium phosphate.

Furthermore, as stated in the paper entitled " Agronomic Effectiveness of Phosphate Fertilizers" authored by O. P. Engelstad et al.(American Society of Agronomy, Madison, Wis. 1980 "Agronomic Effectiveness of Phosphate Fertilizers" pp 311-331) at pp 318 " The soil itself rapidly reverts soluble P to less soluble "slow release" P compounds. Thus, coating of the granules of soluble P fertilizers is largely unnecessary and usually reduces P availability".

### Summary of the Invention

The present invention is founded on the initial speculation that, if the contact between a phosphate based fertilizer and the soil is eliminated or minimized, whilst at the same time exposure of the plant roots to the fertilizer is maintained, then the recovery of phosphorus by the plant would be increased. Experiments which involved the application of the fertilizer at two day intervals confirmed this hypothesis. However, this methodology involving as it did the frequent application of fertilizer, which is both expensive and labour intensive, was rejected in favour of the provision of a specific rate controlling coating which would effectively simulate frequent periodic applications of nutrient under field conditions.

In accordance with the present invention there is provided a controlled release fertilizer which increases efficiency of the phosphate uptake by the plant. The fertilizer comprises a water soluble, phosphate based nutrient core having a moisture permeable coating encapsulating said nutrient core, said coating having an effective permeability whereby at least 80% of the nutrient core is released to the soil over a predetermined period ranging between about five to about thirty days of germination of the seed.

In its most preferred embodiment, the fertilizer comprises a monoammonium or diammonium phosphate core having a polyurethane coating.

It will be noted that the coatings of the present invention function at a rapid release rate in comparison to the coatings of the prior art and is operative to promote increased root growth at the application site thereof.

The invention further extends to a method for improving root growth thereby producing a more vigorous plant or crop and additionally, a higher crop yield. The greatest yield responses and phosphorus recoveries with cereal grain and oilseed crops have been found when the fertilizer is placed in a narrow band close to the seed. Therefore, preferably, the coated fertilizer and seed may be introduced into the soil in the closest proximity practical.

### Description of the Drawing

The present invention will be better understood with reference to the detailed description below and the following drawing.

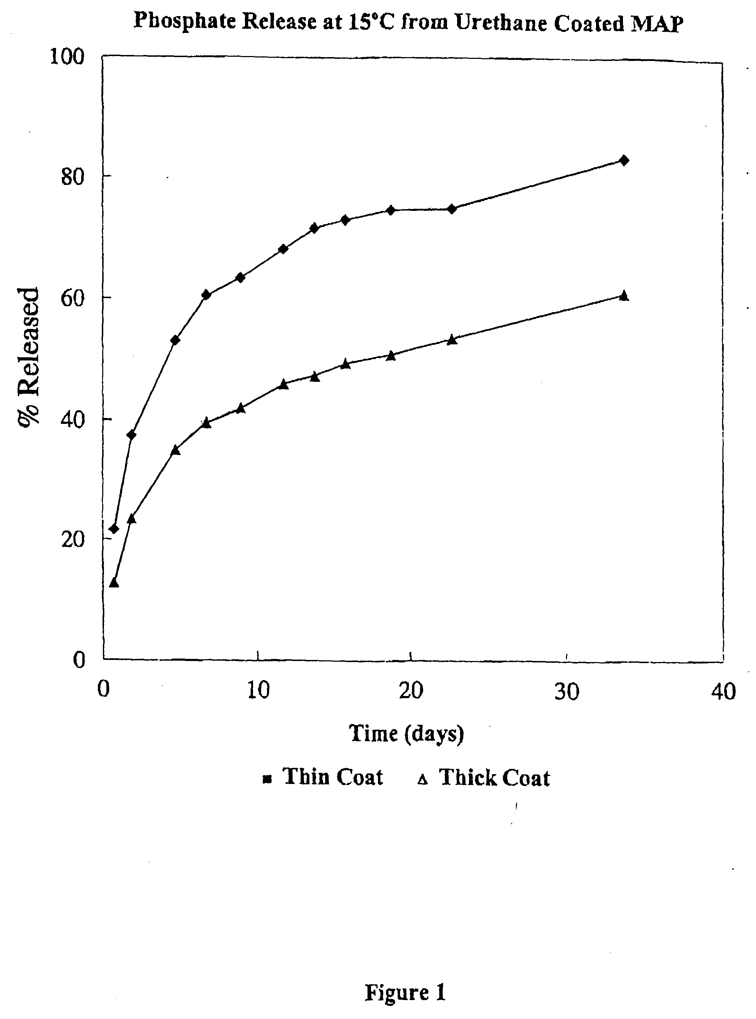

Figure 1 is a plot of the relative rates of fertilizer release versus time for "thin" and "thick" polymer coatings at 15°C; and

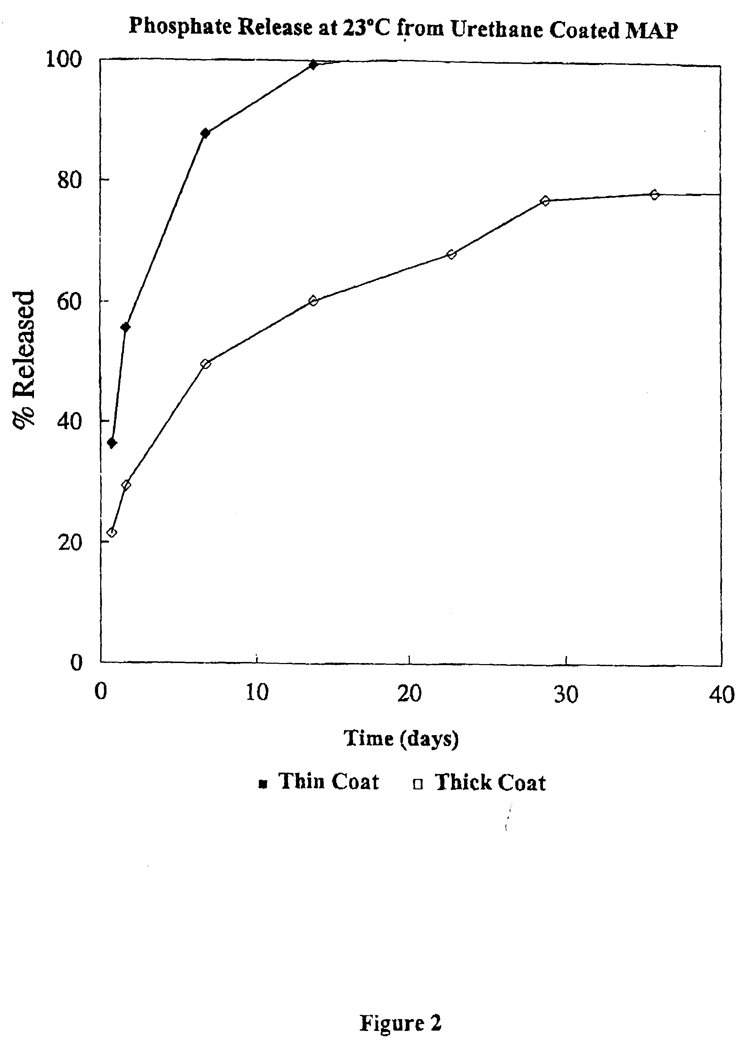

Figure 2 is a plot of the relative rates of fertilizer release versus time for "thin" and "thick" polymer coatings at 23°C.

### Description of the Preferred Embodiment

The instant invention is described having particular reference to polyurethane coated monoammonium phosphate (MAP) and diammonium phosphate (DAP).

The nutrient core, i.e. fertilizer per se, may be selected from monoammonium phosphate, diammonium phosphate, triple super phosphate (monocalcium phosphate), single super phosphate (calcium phosphate/calcium sulphate in admixture) or other suitable, water soluble phosphate-based plant nutrients. The core may be in granular, prill or other suitable solid form.

The applied coating may be selected from suitable polymeric materials, acrylates, cellulose derivatives, sulphur, wax, or sulphur in combination with polymers or with wax. The preferred coating would be a polyurethane exemplary of which would be a retail paint available from General Paints ^{TM}. The criticality with respect to the nature and thickness of the coating resides in its effective permeability, this parameter being predetermined by agronomic testing under field conditions. It is essential that the rate of release be predetermined. In order to obtain the desired increase in plant growth and plant vigour, a fertilizer release rate wherein about 80% of the nutrient core is released over a period of between five to thirty days is required and, often needs only to be effective for a duration of ten to twenty days from germination of the seed. Typically, the time for the release of 100% of the fertilizer should not exceed about sixty days. Thus, the fertilizer should be functional to release at least 80% of the nutrient core within about 30 days of the germination of the seed, germination being defined as the emergence of the shoot from the seed.

As stated earlier, it has been determined that preferably the coated fertilizer should be physically positioned in as close proximity to the seed as is practical. Thus it is envisaged that the seed and controlled release fertilizer may be sown in cohesive relationship one to another. Other sowing methods would encompass conventional broadcasting or alternatively placement of seed strips with the fertilizer in adherence therewith.

Embodiments of the invention for the preparation of polymer coated phosphate based fertilizers and their performance in field trials are provided in the following non-limitative examples.

### Example 1

Monoammonium phosphate fertilizer granules having an average diameter of 2.8 mm were spray coated in a rotating drum with polyurethane. The final coating consisted of several discrete layers, each layer corresponding to 0.5 wt. % polyurethane on each granule. Each layer was dried and cured prior to the application of the succeeding layer. Two products were manufactured, namely a "thin" coating comprising seven layers i.e. 3.5 wt. % polyurethane, and a "thick" coating comprising eleven layers i.e. 5.5 wt % polyurethane. It was determined that the thin layer reflected an approximate release of 80 wt % over a thirty day period of its plant nutrient content at a 15°C soil temperature. Similarly, the thick layer released approximately 80 wt % of its nutrient content over a sixty day period.

### Example 2

Comparative tests were conducted with uncoated, thin coated and thick coated MAP fertilizer on near neutral black chernozem soil of silty loam texture. The dry matter yield of barley plants grown in a greenhouse and the plant recovery of fertilizer phosphorus are shown in Table I given herebelow. The phosphorus recovery was determined by calculating the difference in phosphorus uptake in treatments receiving phosphorus over the phosphorus uptake in the control treatment, divided by the total fertilizer phosphorus applied.

**TABLE I**

| Fertilizer | lb.P/acre | Plant Yield (days) | | | | P Recovery (days) | | | |
|---|---|---|---|---|---|---|---|---|---|
| | fertilizer | 13 | 26 | 39 | 52 | 13 | 26 | 39 | 52 |
| None | 0 | 0.4 | 1.2 | 3.2 | 7.8 | - | - | - | - |
| MAP | 12 | 0.9 | 5.3 | 11.7 | 19.0 | 14 | 26 | 33 | 27 |
| MAP thin | 12 | 0.7 | 5.2 | 13.7 | 24.4 | 9 | 34 | 40 | 44 |
| MAP thick | 12 | 0.6 | 3.6 | 10.1 | 18.6 | 3 | 20 | 32 | 32 |

The plant yield was determined as grams per pot. The phosphorus recovery is given as a numeric percentage.

### Example 3

The crop yield and plant recovery of fertilizer phosphorus by 60-day old barley grown in the field are shown in Table II herebeneath. The results for two field tests have been averaged. The field experiments were also conducted on near neutral black chernozem soils having a silty loam texture.

**TABLE II**

| Fertilizer | Amount of P added | Dry matter Yield (tons/acre) | P recovery (%) |
|---|---|---|---|
| None | 0 | 1.07 | N/A |
| MAP uncoated | 7 | 1.60 | 26 |
| MAP thin | 7 | 2.00 | 54 |
| MAP thick | 7 | 1.30 | 28 |

wherein the amount of P added is in lbs.P/acre.

## Claims

1. A controlled release fertilizer comprising a water soluble, phosphate based nutrient core having a moisture permeable coating encapsulating said nutrient core, said coating having an effective permeability whereby at least 80% of the nutrient core is released to the soil at a predetermined rate over a period within about five to about thirty days of germination of the seed.

2. The fertilizer as set forth in claim 1 wherein said nutrient core is selected from the group comprising monoammonium phosphate, or diammonium phosphate, or triple super phosphate or single super phosphate or nitrogen and/or phosphorus and/or potassium in admixture.

3. The fertilizer as set forth in claims 1 or 2 wherein said moisture permeable coating is selected from the group comprising sulphur, waxes, polymeric compounds, acrylates, cellulose derivatives, or sulphur in combination with polymers or with wax.

4. The fertilizer as set forth in claims 1 or 3 wherein said coating is functional to control the release of nutrient to the soil at a constant rate or a predetermined variable rate.

5. The fertilizer as set forth in claim 1 wherein said nutrient core is selected from monoammonium phosphate or diammonium phosphate and said moisture permeable coating is polyurethane, said coating being functional to control the release of said nutrient to the soil at a constant rate or a predetermined variable rate.

6. A method for improving plant root growth and yield which comprises applying the fertilizer of claims 1, 2, 3, 4 or 5 to the soil at or about the time of seeding.

7. A method as set forth in claim 6 wherein said plant seed and said fertilizer are introduced into said soil in close proximity one to another.

8. A control release fertilizer comprising a highly water soluble phosphate nutrient in combination with means for retarding the predetermined release of at least 80% of said nutrient to the soil within five to thirty days of the germination of the seed.

9. The fertilizer as set forth in claim wherein said nutrient is selected from the group comprising monoammonium phosphate, or diammonium phosphate, or triple super phosphate or single super phosphate or nitrogen and/or phosphorus and/or potassium in admixture.
